# FASCICULE DE BREVET EUROPEEN

(11) **EP 2 368 279 B1**
(45) Date de publication et mention de la délivrance du brevet: **30.01.2013**
(21) Numéro de dépôt: 09784355.1
(22) Date de dépôt: 02.12.2009
(51) Int. Cl.: F25B 21/04

(54) **PROCEDE D'ETABLISSEMENT ACCELERE D'UN GRADIENT DE TEMPERATURE DANS UN ELEMENT MAGNETOCALORIOUE ET GENERATEUR THERMIQUE MAGNETOCALORIOUE METTANT EN OUVRE LEDIT PROCEDE**
VERFAHREN ZUM SCHNELLEN AUFBAU EINES TEMPERATURGRADIENTEN IN EINEM MAGNETOKALORISCHEN ELEMENT UND MAGNETOKALORISCHER THERMISCHER GENERATOR, DER DAS VERFAHREN IMPLEMENTIERT
METHOD FOR QUICKLY ESTABLISHING A TEMPERATURE GRADIENT IN A MAGNETOCALORIC ELEMENT, AND MAGNETOCALORIC THERMAL GENERATOR IMPLEMENTING SAID METHOD

(30) Priorité: 19.12.2008 FR 0807190
(43) Date de publication de la demande: 28.09.2011
(73) Titulaire: Cooltech Applications S.A.S., 67810 Holtzheim (FR)
(72) Inventeur: HEITZLER, Jean-Claude, 68180 Horbourg Wihr (FR); MULLER, Christian, 67000 Strasbourg (FR)
(74) Mandataire: Koelbel, Caroline
(86) Numéro de dépôt international: PCT/FR2009/001368
(87) Numéro de publication internationale: WO 2010/076405

(56) Documents cités:
- WO-A-03/016794
- US-A- 2 510 801

## Description

### Domaine technique :

La présente invention concerne un procédé d'établissement accéléré d'un gradient de température prédéterminé dans un élément magnétocalorique, entre ses deux extrémités opposées dites extrémité chaude et extrémité froide, ledit élément magnétocalorique étant constitué par une succession d'au moins deux matériaux magnétocaloriques présentant une température de Curie différente et disposés selon leur température de Curie croissante, l'extrémité chaude de l'élément magnétocalorique étant constituée par le matériau magnétocalorique possédant la température de Curie la plus élevée et l'extrémité froide de l'élément magnétocalorique étant constituée par le matériau magnétocalorique possédant la température de Curie la plus basse, ledit procédé consistant à soumettre l'élément magnétocalorique à un champ magnétique variable créant alternativement, dans lesdits matériaux magnétocaloriques, un cycle d'échauffement et un cycle de refroidissement.

Elle concerne également un générateur thermique magnétocalorique mettant en oeuvre ce procédé.

### Technique antérieure :

La technologie du froid magnétique à température ambiante est connue depuis plus d'une vingtaine d'années et on sait les avantages qu'elle apporte en termes d'écologie et de développement durable. On connaît également ses limites quant à sa puissance calorifique utile et à son rendement, Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

Un exemple se trouve dans le brevet US2510801. Le choix des matériaux magnétocaloriques est déterminant et influence directement les performances d'un générateur thermique magnétocalorique. L'effet magnétocalorique culmine au voisinage de la température de Curie des matériaux magnétocaloriques dans leur zone de transition de phase. Il existe actuellement deux grandes familles de matériaux magnétocaloriques. La premier famille comprend les matériaux magnétocaloriques qui présentent un effet important sur une bande de températures assez étroite, alors que la seconde famille de matériaux magnétocaloriques concerne des matériaux présentant un effet magnétocalorique moins important, mais sur une bande de températures plus large. Or, une difficulté particulière consiste à réaliser un générateur magnétocalorique pouvant fonctionner avec une efficacité élevée dans une large gamme de températures de manière à adapter les niveaux de température du générateur avec les températures externes.

De nombreux générateurs thermiques magnétocaloriques exploitent l'effet magnétocalorique de matériaux magnétocaloriques en faisant circuler un fluide caloporteur le long ou à travers desdits matériaux magnétocaloriques, dans deux sens opposés, en fonction des cycles d'aimantation et de désaimantation desdits matériaux magnétocaloriques. Le fluide utilisé est également destiné à échanger thermiquement ses calories et/ou frigories avec un circuit extérieur. Lors du démarrage d'un générateur thermique à matériau magnétocalorique, la circulation du fluide permet d'obtenir un gradient de température entre les extrémités opposées du matériau magnétocalorique. L'obtention de ce gradient de température dépend de la température initiale et du débit du fluide caloporteur, de l'intensité de l'effet magnétocalorique de la température de Curie et de la longueur du matériau magnétocalorique. Plus la température initiale et la température de Curie du matériau magnétocalorique sont proches ou adaptées, plus vite sera atteint un gradient de température à partir duquel le générateur est fonctionnel et peut produire ou échanger de l'énergie thermique avec un circuit extérieur. Or, la température initiale du fluide caloporteur n'est pas contrôlée et est égale à la température extérieure au générateur, et peut donc s'inscrire dans une gamme très large de températures, par exemple entre - 20°C et + 60°C. Dans ces conditions, les matériaux magnétocaloriques doivent être choisis en fonction de leur température de Curie et de l'environnement dans lequel le générateur sera intégré ou fonctionnera. Pour augmenter le rendement, cela implique de réaliser, pour une application donnée, un générateur pour chaque type d'environnement.

Une solution pour limiter le nombre de générateurs spécifiques à prévoir consiste à utiliser des matériaux magnétocaloriques dont la zone de transition est large (de l'ordre de 20°K par exemple). Or, l'effet magnétocalorique de ces matériaux est généralement faible, ce qui limite l'intérêt de cette solution car elle ne permet pas d'obtenir un rendement acceptable du générateur.

Une autre proposition consiste à intégrer dans le générateur plusieurs matériaux magnétocaloriques avec un effet magnétocalorique important. Toutefois cette solution présente des inconvénients liés à la faible zone de transition de ces matériaux car l'effet magnétocalorique de certains de ces matériaux peut ne pas se produire si la température du fluide caloporteur n'atteint jamais la zone de transition de ces derniers, c'est-à-dire n'est pas adaptée à la température de Curie du ou des matériau(x) en question. De plus, le temps d'atteinte d'un gradient de température entre les extrémités chaude et froide de l'élément magnétocalorique peut être long du fait de la multiplicité des matériaux utilisés.

Pour pallier ces inconvénients, la demanderesse a proposé, dans sa demande de brevet français n° 08/05280, une solution consistant à intégrer, dans un élément magnétocalorique constitué par plusieurs matériaux magnétocaloriques de température de Curie différente, des moyens d'amorçage d'un gradient de température entre les deux extrémités opposées chaude et froide dudit élément magnétocalorique. Ces moyens d'amorçage ont pour but d'accélérer la mise en place d'un gradient de température entre les deux extrémités opposées de l'élément magnétocalorique afin d'atteindre rapidement un régime établi et sont constitués par au moins un matériau magnétocalorique présentant une zone de transition plus importante que celle des matériaux magnétocaloriques formant l'élément magnétocalorique en question.

### Exposé de l'invention :

La présente invention vise également à pallier les inconvénients de l'art antérieur tout en proposant une alternative à la solution décrite dans la demande de brevet français n° 08/05280. Elle a pour but de proposer un procédé permettant d'établir rapidement un gradient de température prédéterminé entre les deux extrémités d'un élément magnétocalorique constitué par plusieurs matériaux magnétocaloriques disposés selon leur température de Curie croissante. Un tel procédé est susceptible d'établir le gradient de température et donc d'atteindre la fonctionnalité optimale d'un élément magnétocalorique dans tout type d'environnement en terme de température, et dans un lapse de temps raccourci. En outre, il permet d'accélérer le temps d'atteinte dudit gradient de température sans modifier la structure de l'élément magnétocalorique.

Dans ce but, l'invention concerne un procédé d'établissement accéléré d'un gradient de température prédéterminé dans un élément magnétocalorique du genre indiqué en préambule, caractérisé en ce qu'il consiste, simultanément à la variation de champ magnétique, à faire circuler un fluide caloporteur à travers ledit élément magnétocalorique selon une alternance de courses de longueur variable et dirigées successivement vers l'extrémité chaude et l'extrémité froide jusqu'à atteindre ledit gradient de température prédéterminé.

Le gradient de température prédéterminé correspond au gradient de température maximal déterminé par la nature des matériaux magnétocaloriques constituant l'élément magnétocalorique.

Ce procédé peut notamment consister à faire circuler le fluide caloporteur selon une alternance de courses successives de longueur croissante.

Il peut encore consister à faire circuler le fluide caloporteur selon une alternance de courses successives de longueur minimale sensiblement égale à la longueur d'un desdits matériaux magnétocaloriques à une longueur au moins égale à celle de l'élément magnétocalorique.

De préférence, la longueur minimale desdites courses peut être égale à la longueur du matériau magnétocalorique dont la température de Curie est adaptée à la température initiale du fluide caloporteur. Par température de Curie adaptée à la température initiale, il faut comprendre que la température initiale du fluide est apte à établir un gradient de température entre les extrémités opposées dudit matériau magnétocalorique sous l'effet d'une variation de champ magnétique.

Par longueur de matériau magnétocalorique, il faut comprendre la distance de matériau parcourue ou balayée par le fluide caloporteur.

Selon une variante, ledit procédé peut consister à faire circuler le fluide caloporteur selon une alternance de courses successives de longueur croissante par paliers successifs.

Selon une autre variante, il peut consister à faire circuler le fluide caloporteur selon une alternance de courses successives de longueur linéairement croissante.

Selon encore une autre variante, ledit procédé peut consister à faire circuler le fluide caloporteur selon une alternance de courses successives de longueur non linéairement croissante.

L'invention concerne également un générateur thermique magnétocalorique comportant au moins un élément magnétocalorique constitué par une succession d'au moins deux matériaux magnétocaloriques présentant une température de Curie différente et disposés selon leur température de Curie croissante, l'extrémité chaude dudit élément magnétocalorique étant constituée par le matériau magnétocalorique possédant la température de Curie la plus élevée et l'extrémité froide dudit élément magnétocalorique étant constituée par le matériau magnétocalorique possédant la température de Curie la plus basse, et par au moins un arrangement magnétique et au moins un moyen d'entraînement d'un fluide caloporteur, ledit arrangement magnétique étant agencé pour soumettre lesdits matériaux magnétocaloriques à une variation de champ magnétique et créer alternativement, dans ces derniers, un cycle d'échauffement et un cycle de refroidissement. Ce générateur est caractérisé en ce qu'il met en oeuvre le procédé selon l'invention et en ce que ledit moyen d'entraînement d'un fluide caloporteur est agencé pour déplacer ledit fluide caloporteur selon une alternance de courses de longueur variable et dirigées successivement vers l'extrémité chaude et l'extrémité froide jusqu'à atteindre un gradient de température prédéterminé entre lesdites extrémités chaude et froide.

En outre, pour augmenter le rendement d'un tel générateur, ledit générateur peut comporter au moins un élément magnétocalorique constitué par des matériaux magnétocaloriques possédant un effet magnétocalorique maximal dans la plage thermique d'utilisation dudit générateur.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels :
- la figure 1 est une vue schématique illustrant le mouvement du fluide caloporteur selon une première variante du procédé de l'invention, à travers un élément magnétocalorique;
- la figure 2 est une vue similaire à celle de la figure 1 dans laquelle le fluide caloporteur est déplacé selon une deuxième variante du procédé selon l'invention, et
- la figure 3 est une vue similaire à celle de la figure 1 dans laquelle le fluide caloporteur est déplacé selon une troisième variante du procédé selon l'invention.

### Illustrations de l'invention :

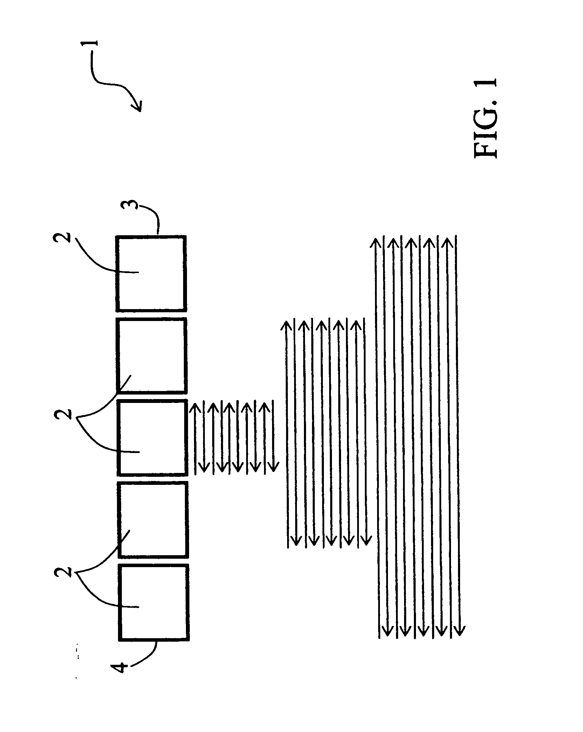

La figure 1 représente schématiquement, selon une vue en élévation, un élément magnétocalorique 1 constitué par un assemblage de cinq matériaux magnétocaloriques 2. Ces matériaux magnétocaloriques 2 sont traversés par un fluide caloporteur (suivant les flèches) tout en étant soumis à une variation de champ magnétique afin d'établir un gradient de température entre les deux extrémités de l'élément magnétocalorique 1 qu'ils composent, à savoir une extrémité chaude 3 et une extrémité froide 4.

De préférence, les matériaux magnétocaloriques 2 peuvent comporter un important effet magnétocalorique, de sorte que leur juxtaposition permet de réaliser un gradient de température élevé entre les extrémités 3 et 4 d'un même élément magnétocalorique et donc d'obtenir un rendement important. Une telle configuration permet également de couvrir une large zone de températures qui pourra correspondre à la zone de fonctionnement ou d'utilisation.

Afin de faciliter ces échanges thermiques avec le fluide caloporteur, lesdits matériaux magnétocaloriques 2 peuvent être poreux de sorte que leurs pores constituent des passages de fluide débouchants. Ils peuvent également être sous la forme d'un bloc plein dans lequel des minis ou micro-canaux ont été usinés ou encore être constitués par un assemblage de plaques, éventuellement rainurées, superposées et entre lesquelles le fluide caloporteur peut s'écouler. Toute autre forme de réalisation permettant au fluide caloporteur de traverser lesdits matériaux magnétocaloriques peuvent, bien entendu convenir.

L'élément magnétocalorique 1 de la figure 1 est traversé par un fluide caloporteur. La phase d'amorçage ou de démarrage pendant laquelle le procédé est mis en oeuvre consiste à obtenir un gradient de température entre les extrémités chaude 3 et froide 4 en soumettant ledit élément magnétocalorique 1 à un champ magnétique d'intensité variable tout en faisant circuler un fluide caloporteur à travers ledit élément magnétocalorique en alternance vers les extrémités chaude 3 et froide 4 selon une course ou trajet de longueur variable.

Dans l'ensemble des figures annexées, les flèches illustrant les courses du fluide caloporteur sont dirigées vers l'extrémité chaude 3 lors des cycles de magnétisation et vers l'extrémité froide 4 lors des cycles de démagnétisation. Le sens des flèches est, bien entendu, inversé dans le cas de matériaux magnétocaloriques 2 à effet inverse.

Dans la variante représentée à la figure 1, la longueur de la course augmente par paliers successifs. Pour des questions de clarté, ce mouvement du fluide caloporteur est représenté schématiquement par les flèches sur la figure 1 en regard d'un seul matériau magnétocalorique 2, étant précisé que ce mouvement se reproduit simultanément dans tous les matériaux magnétocaloriques 2 de l'élément magnétocalorique 1.

Lorsque le gradient est atteint, l'élément magnétocalorique 1 est totalement opérationnel et entre dans une phase de régime établi. Pendant cette phase, il est donc possible d'extraire l'énergie thermique générée par l'élément magnétocalorique 1 en réalisant des échanges thermiques avec le fluide caloporteur circulant à travers ledit élément magnétocalorique 1 tout en maintenant le gradient de température entre ses deux extrémités chaude 3 et froide 4. Ce maintient du gradient de température est réalisé en faisant circuler le fluide caloporteur à travers l'élément magnétocalorique 1 de manière synchronisée avec la variation du champ magnétique qui réalise alternativement dans ledit élément magnétocalorique un cycle d'échauffement et un cycle de refroidissement.

Dans cette variante du procédé selon l'invention, l'amplitude ou la longueur de la course effectuée par le fluide caloporteur augmente par paliers successifs. Le mouvement comprend tout d'abord une série de courses du fluide caloporteur dont la longueur est égale à la longueur d'un matériau magnétocalorique 2 formant l'élément magnétocalorique 1. Lorsque tous les matériaux présentent une même longueur, ce qui est le cas ici, cette première série de passages ou trajets du fluide caloporteur permet de couvrir toute la longueur de chaque matériau magnétocalorique 2 et donc d'obtenir un gradient de température entre les deux extrémités chaude et froide du ou des matériaux magnétocaloriques 2 dont la température de Curie est adaptée à la température du fluide caloporteur. Etant donné que les matériaux magnétocaloriques 2 constituant l'élément magnétocalorique 1 sont disposés selon leur température de Curie croissante, la deuxième série de courses ou passages du fluide caloporteur, qui va couvrir les deux matériaux magnétocaloriques 2 adjacents au matériau magnétocalorique 2 dans lequel un gradient de température a été créé, va permettre de créer un gradient de température dans ces deux matériaux magnétocaloriques 2 adjacents.

L'obtention d'un gradient de température entre les deux extrémités chaude 3 et froide 4 de l'élément magnétocalorique 1 se fait donc de proche en proche, chaque matériau magnétocalorique 2 actif (c'est-à-dire entre les extrémités duquel un gradient de température est installé) activant les matériaux magnétocaloriques 2 adjacents. Cette activation se fait donc de proche en proche, grâce au déplacement particulier du fluide caloporteur, et par conduction thermique. Ainsi, le gradient de température est obtenu plus rapidement que dans les dispositifs et procédés conventionnels qui font circuler tout le fluide caloporteur à travers toute la longueur de l'élément magnétocalorique. En outre, ce procédé permet de garantir l'établissement d'un gradient de température entre les deux extrémités 3, 4 de l'élément magnétocalorique 1 à la seule condition qu'il comporte au moins un matériau magnétocalorique 2 dont la température de Curie est adaptée à la température initiale du fluide caloporteur.

Bien entendu, la longueur des courses réalisées par le fluide caloporteur pour chaque palier n'est pas limitée à celle décrite ci-dessous. En fonction des matériaux utilisés et de la longueur constante ou non de ces derniers, d'autres configurations peuvent être prévues, telles que par exemple une première série de courses dont la longueur peut correspondre à la longueur d'un matériau magnétocalorique 2 ou être inférieure à ladite longueur, puis une seconde série de courses de longueur double, puis une troisième série de courses de longueur triple, et ainsi de suite.

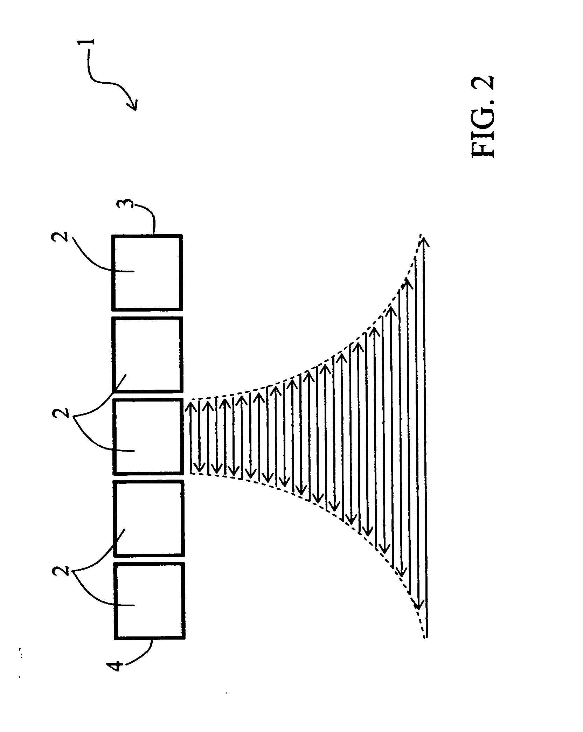

Dans une deuxième variante du procédé selon l'invention, plus particulièrement illustrée à la figure 2, la longueur des courses augmente de façon non linéaire. Cette variante permet également de favoriser l'établissement du gradient de température dans l'élément magnétocalorique 1.

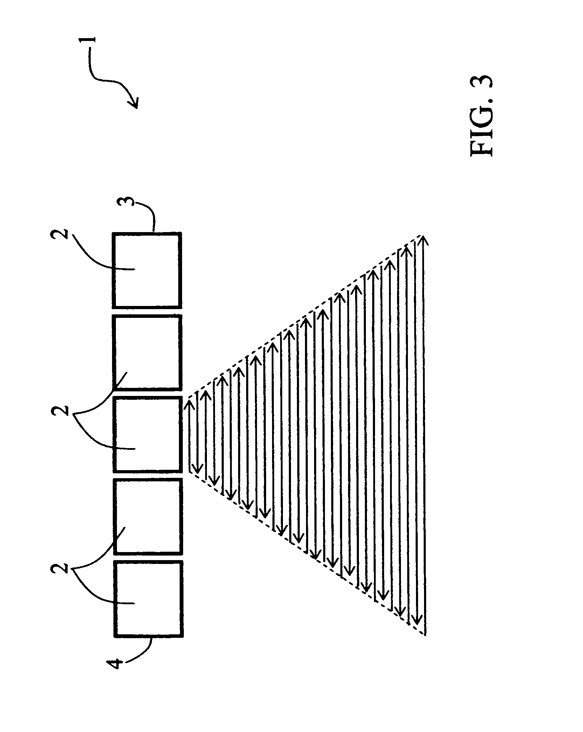

Enfin, la figure 3 illustre schématiquement une troisième variante du procédé dans laquelle la longueur des courses effectuées par le fluide caloporteur augmente de manière linéaire de sorte que l'établissement du gradient de température est réalisé également de proche en proche.

Grâce au procédé selon l'invention, il est donc possible d'établir rapidement un gradient de température entre deux extrémités chaude 3 et froide 4 d'un élément magnétocalorique 1 comprenant plusieurs matériaux magnétocaloriques 2 avec différentes températures de Curie. Un tel procédé permet d'exploiter au maximum un tel élément magnétocalorique 1 en activant rapidement l'ensemble des matériaux magnétocaloriques 2 qui le constituent. Un tel élément magnétocalorique 1 s'amorce quelle que soit la température initiale du fluide caloporteur, du moment que l'un au moins de ses matériaux possède une température de Curie adaptée à cette température initiale. Le procédé permet d'établir le gradient de température entre les deux extrémités chaude 3 et froide 4 de l'élément magnétocalorique 1 en activant de proche en proche chaque zone de l'élément magnétocalorique 1.

Ce procédé présente également l'avantage d'exploiter de manière plus efficace le volume disponible pour l'intégration de matériaux magnétocaloriques 2 dans un élément magnétocalorique 1. En effet, par rapport à la solution proposée dans sa demande antérieure FR 08/05280 mentionnée précédemment, les moyens d'amorçage utilisés pour accélérer l'établissement du gradient de température entre les extrémités opposées d'un élément magnétocalorique sont constitués par des matériaux magnétocaloriques spécifiques intégrés dans l'élément magnétocalorique. Or, ces matériaux d'amorçage sont des matériaux dont l'effet magnétocalorique est faible par rapport aux autres matériaux magnétocaloriques constituant ledit élément magnétocalorique. Ainsi, ces matériaux d'amorçage ne sont efficaces et exploitables thermiquement que lors de la phase d'amorçage, de sorte que leur présence est d'un intérêt limité dès lors que le gradient de température est en place entre les extrémités opposées de l'élément magnétocalorique. Ainsi, le procédé décrit dans la présente invention permet d'utiliser un élément magnétocalorique plus compact ou dont le ratio volume occupé sur rendement est plus important.

L'invention concerne également un générateur thermique magnétocalorique. Ce dernier (non représenté) comporte au moins un élément magnétocalorique 1 constitué par une succession d'au moins deux matériaux magnétocaloriques 2 présentant une température de Curie différente et disposés selon leur température de Curie croissante en direction de l'extrémité chaude 4 dudit élément magnétocalorique 1. Un arrangement magnétique, par exemple constitué par un assemblage d'aimants permanents mis en mouvement par rapport audit élément magnétocalorique 1, est prévu pour soumettre ledit élément magnétocalorique 1 à une variation de champ magnétique et créer alternativement, dans ce dernier, un cycle d'échauffement et un cycle de refroidissement. Des électroaimants alimentés séquentiellement peuvent également réaliser cette variation de champ magnétique.

Un tel générateur thermique est destiné à restituer l'énergie thermique produite par ledit élément magnétocalorique 1, et plus particulièrement par les matériaux magnétocaloriques 2 qu'il renferme, et ce, à un ou plusieurs circuits extérieurs. Cette restitution est réalisée par un échange thermique avec le fluide caloporteur par tous moyens adaptés et connus tels que des échangeurs.

Ce générateur comporte également un moyen d'entrainement d'un fluide caloporteur à travers ledit élément magnétocalorique. Un tel moyen d'entraînement peut par exemple être une pompe associée à des clapets ou une pompe à excentrique, et déplace le fluide caloporteur selon un mouvement de va-et-vient avec des courses d'amplitude variable et/ou croissante à travers chaque élément magnétocalorique.

Un tel générateur selon l'invention est fonctionnel dans une large gamme de températures extérieures et présente un temps de démarrage réduit, dû au fait qu'il met en oeuvre le procédé selon l'invention permettant d'établir très rapidement un gradient de température entre les extrémités chaude 3 et froide 4 de chaque élément magnétocalorique. En effet, lorsque le gradient de température est atteint, l'élément magnétocalorique 1 est dans un régime établi. Ceci implique que plus rapidement ce gradient est atteint, plus rapidement le générateur thermique est opérationnel.

En outre, un tel générateur thermique peut comporter une sonde de température permettant d'identifier la température initiale du fluide caloporteur. Dans ce cas, ledit générateur peur également comporter un dispositif de commande apte à identifier le ou les matériau(x) magnétocaloriques 2 susceptibles d'être activés avec cette température initiale et à imposer au moyen d'entraînement le type de mouvement à imprimer au fluide caloporteur (forme, nombre et longueur des courses) pour obtenir le plus rapidement possible un gradient de température prédéterminé entre les deux extrémités chaude 3 et froide 4 de chaque élément magnétocalorique 1. De préférence, la longueur de la course initiale réalisée par le fluide caloporteur est égale à celle du ou des matériau(x) magnétocaloriques 2 dont la température de Curie est adaptée à la température initiale dudit fluide caloporteur.

### Possibilités d'application industrielle :

Il ressort clairement de cette description que l'invention permet d'atteindre les buts fixés, à savoir proposer un procédé permettant d'accélérer le temps d'atteinte d'un gradient de température pour obtenir un régime établi dans un élément magnétocalorique susceptible de fonctionner dans une large gamme de température constitué par des matériaux magnétocaloriques comportant différentes températures de Curie, ainsi qu'un générateur thermique magnétocalorique dont la durée de mise en route est accélérée et donc susceptible de produire très rapidement une grande quantité d'énergie thermique ce, indépendamment des conditions de température extérieure.

Le procédé et le générateur thermique selon l'invention peuvent trouver une application aussi bien industrielle que domestique dans le domaine du chauffage, de la climatisation, du tempérage, refroidissement ou autres, ce, à des coûts compétitifs et dans un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Procédé d'établissement accéléré d'un gradient de température prédéterminé dans un élément magnétocalorique (1), entre ses deux extrémités opposées dites extrémité chaude (3) et extrémité froide (4), ledit élément magnétocalorique (1) étant constitué par une succession d'au moins deux matériaux magnétocaloriques (2) présentant une température de Curie différente et disposés selon leur température de Curie croissante, l'extrémité chaude (3) de l'élément magnétocalorique (1) étant constituée par le matériau magnétocalorique (2) possédant la température de Curie la plus élevée et l'extrémité froide (4) de l'élément magnétocalorique (1) étant constituée par le matériau magnétocalorique (2) possédant la température de Curie la plus basse, ledit procédé consistant à soumettre l'élément magnétocalorique (1) à un champ magnétique variable créant alternativement, dans lesdits matériaux magnétocaloriques (2), un cycle d'échauffement et un cycle de refroidissement **caractérisé en ce que** ledit procédé consiste, simultanément à la variation de champ magnétique, à faire circuler un fluide caloporteur à travers ledit élément magnétocalorique (1) selon une alternance de courses de longueur variable et dirigées successivement vers l'extrémité chaude (3) et l'extrémité froide (4) jusqu'à atteindre ledit gradient de température prédéterminé.

2. Procédé, selon la revendication 1, **caractérisé en ce qu'**il consiste à faire circuler le fluide caloporteur selon une alternance de courses successives de longueur croissante.

3. Procédé, selon la revendication 2, **caractérisé en ce qu'**il consiste faire circuler le fluide caloporteur selon une alternance de courses successives de longueur minimale sensiblement égale à la longueur d'un desdits matériaux magnétocaloriques (2) à une longueur au moins égale à celle de l'élément magnétocalorique (1).

4. Procédé, selon la revendication 3, **caractérisé en ce que** la longueur minimale desdites courses est égale à la longueur du matériau magnétocalorique (2) dont la température de Curie est adaptée à la température initiale du fluide caloporteur.

5. Procédé, selon l'une quelconque des revendications précédentes, **caractérisé en ce qu'**il consiste à faire circuler le fluide caloporteur selon une alternance de courses successives de longueur croissante par paliers successifs.

6. Procédé, selon l'une quelconque des revendications 1 à 4, **caractérisé en ce qu'**il consiste à faire circuler le fluide caloporteur selon une alternance de courses successives de longueur linéairement croissante.

7. Procédé, selon l'une quelconque des revendications 1 à 4, **caractérisé en ce qu'**il consiste à faire circuler le fluide caloporteur selon une alternance de courses successives de longueur non linéairement croissante.

8. Générateur thermique magnétocalorique comportant au moins un élément magnétocalorique (1) constitué par une succession d'au moins deux matériaux magnétocaloriques (2) présentant une température de Curie différente et disposés selon leur température de Curie croissante, l'extrémité chaude (3) dudit élément magnétocalorique (1) étant constituée par le matériau magnétocalorique (2) possédant la température de Curie la plus élevée et l'extrémité froide (4) dudit élément magnétocalorique (1) étant constituée par le matériau magnétocalorique (2) possédant la température de Curie la plus basse, et par au moins un arrangement magnétique et au moins un moyen d'entraînement d'un fluide caloporteur, ledit arrangement magnétique étant agencé pour soumettre lesdits matériaux magnétocaloriques (2) à une variation de champ magnétique et créer alternativement, dans ces derniers, un cycle d'échauffement et un cycle de refroidissement, générateur **caractérisé en ce qu'**il met en oeuvre le procédé selon l'une quelconque des revendications 1 à 7 et **en ce que** ledit moyen d'entraînement d'un fluide caloporteur est agencé pour déplacer ledit fluide caloporteur selon une selon une alternance de courses de longueur variable et dirigées successivement vers l'extrémité chaude (3) et l'extrémité froide (4) jusqu'à atteindre un gradient de température prédéterminé entre lesdites extrémités chaude (3) et froide (4).

9. Générateur, selon la revendication 8, **caractérisé en ce qu'**il comporte au moins un élément magnétocalorique (1) constitué par des matériaux magnétocaloriques (2) possédant un effet magnétocalorique maximal dans la plage thermique d'utilisation dudit générateur.

## Claims

1. Process for an accelerated build-up of a predetermined temperature gradient in a magnetocaloric element (1), between its both opposite ends called hot end (3) and cold end (4), said magnetocaloric element (1) being made up of a succession of at least two magnetocaloric materials (2) having a different Curie temperature and arranged according to their increasing Curie temperature, the hot end (3) of the magnetocaloric element (1) being made up of the magnetocaloric material (2) having the highest Curie temperature and the cold end (4) of the magnetocaloric element (1) being made up of the magnetocaloric material (2) having the lowest Curie temperature, said process consisting in subjecting the magnetocaloric element (1) to a variable magnetic field, creating alternately in said magnetocaloric materials (2) a heating cycle and a cooling cycle, **characterized in that** said process consists, simultaneously with the magnetic field variation, in circulating a heat transfer fluid through said magnetocaloric element (1) according to an alternation of strokes with variable lengths and directed successively towards the hot end (3) and the cold end (4), until said predetermined temperature gradient is reached.

2. Process according to claim 1, **characterized in that** it consists in circulating the heat transfer fluid according to an alternation of successive strokes with an increasing length.

3. Process according to claim 2, **characterized in that** it consists in circulating the heat transfer fluid according to an alternation of successive strokes reaching from a minimum length approximately equal to the length of one of said magnetocaloric materials (2) to a length at least equal to that of the magnetocaloric element (1).

4. Process according to claim 3, **characterized in that** the minimum length of said strokes is equal to the length of the magnetocaloric material (2) whose Curie temperature is adapted to the initial temperature of the heat transfer fluid.

5. Process according to any of the previous claims, **characterized in that** it consists in circulating the heat transfer fluid according to an alternation of successive strokes with lengths that increase in successive thresholds.

6. Process according to any of the claims 1 to 4, **characterized in that** it consists in circulating the heat transfer fluid according to an alternation of successive strokes with lengths that increase linearly.

7. Process according to any of the claims 1 to 4, **characterized in that** it consists in circulating the heat transfer fluid according to an alternation of successive strokes with lengths that increase non-linearly.

8. Magnetocaloric heat generator comprising at least one magnetocaloric element (1) made up of a succession of at least two magnetocaloric materials (2) having a different Curie temperature and arranged according to their increasing Curie temperature, the hot end (3) of said magnetocaloric element (1) being made of the magnetocaloric material (2) having the highest Curie temperature and the cold end (4) of said magnetocaloric element (1) being made of the magnetocaloric material (2) having the lowest Curie temperature, and of at least one magnetic arrangement and at least one means of circulation for a heat transfer fluid, said magnetic arrangement being arranged to subject said magnetocaloric materials (2) to a magnetic field variation and create alternately in them a heating cycle and a cooling cycle, generator **characterized in that** it implements the process according to the any of the claims 1 to 7 and **in that** said means of circulation for a heat transfer fluid is arranged to move said heat transfer fluid according to an alternation of strokes with variable lengths and directed successively towards the hot end (3) and the cold end (4) until a predetermined temperature gradient is reached between said hot (3) and cold ends (4).

9. Generator according to claim 8, **characterized in that** it comprises at least one magnetocaloric element (1) made up of magnetocaloric materials (2) having a maximum magnetocaloric effect in the operating thermal range of said generator.

## Patentansprüche

1. Verfahren zum schnellen Aufbau eines vorbestimmten Temperaturgradienten in einem magnetokalorischen Element (1) zwischen seinen beiden entgegen gesetzten, als warmes Ende (3) und kaltes Ende (4) bezeichneten Enden, wobei das besagte magnetokalorische Element (1) aus einer Folge von mindestens zwei magnetokalorischen Materialien (2) mit verschiedenen Curie-Temperaturen besteht, die nach ihrer steigenden Curie-Temperatur angeordnet sind, wobei das warme Ende (3) des magnetokalorischen Elements (1) aus dem magnetokalorischen Material (2) mit der höchsten Curie-Temperatur besteht und das kalte Ende (4) des magnetokalorischen Elements (1) aus dem magnetokalorischen Material (2) mit der niedrigsten Curie-Temperatur besteht, wobei das besagte Verfahren darin besteht, das magnetokalorische Element (1) einem variablen Magnetfeld auszusetzen, das abwechselnd in den besagten magnetokalorischen Materialien (2) einen Heiz-Zyklus und einen Kühl-Zyklus erzeugt, **dadurch gekennzeichnet, dass** das besagte Verfahren darin besteht, simultan mit der Variation des Magnetfelds ein Wärmeübertragungsfluid in einer Wechselfolge von Hüben mit variablen Längen nacheinander in Richtung des warmen Endes (3) und des kalten Endes (4) durch das besagte magnetokalorische Element (1) hindurch zirkulieren zu lassen, bis der besagte vorbestimmte Temperaturgradient erreicht wird.

2. Verfahren nach Anspruch 1, **dadurch gekennzeichnet, dass** es darin besteht, das Wärmeübertragungsfluid in einer Wechselfolge von aufeinanderfolgenden Hüben mit zunehmender Länge zirkulieren zu lassen.

3. Verfahren nach Anspruch 2, **dadurch gekennzeichnet, dass** es darin besteht, das Wärmeübertragungsfluid in einer Wechselfolge von aufeinanderfolgenden Hüben mit einer Mindestlänge merklich gleich der Länge eines der besagten magnetokalorischen Materialien (2) bis zu einer Länge mindestens gleich der des magnetokalorischen Elements (1) zirkulieren zu lassen.

4. Verfahren nach Anspruch 3, **dadurch gekennzeichnet, dass** die Mindestlänge der besagten Hübe gleich der Länge des magnetokalorischen Materiales (2) ist, dessen Curie-Temperatur an die Anfangs-Temperatur des Wärmeübertragungsfluids angepasst ist.

5. Verfahren nach einem beliebigen der vorhergehenden Ansprüche, **dadurch gekennzeichnet, dass** es darin besteht, das Wärmeübertragungsfluid in einer Wechselfolge von aufeinanderfolgenden Hüben mit einer in aufeinanderfolgenden Schwellen zunehmender Länge zirkulieren zu lassen.

6. Verfahren nach einem beliebigen der Ansprüche 1 bis 4, **dadurch gekennzeichnet, dass** es darin besteht, das Wärmeübertragungsfluid in einer Wechselfolge von aufeinanderfolgenden Hüben mit einer linear zunehmender Länge zirkulieren zu lassen.

7. Verfahren nach einem beliebigen der Ansprüche 1 bis 4, **dadurch gekennzeichnet, dass** es darin besteht, das Wärmeübertragungsfluid in einer Wechselfolge von aufeinanderfolgenden Hüben mit einer nicht linear zunehmender Länge zirkulieren zu lassen.

8. Magnetokalorischer thermischer Generator mit zumindest einem magnetokalorischen Element (1) bestehend aus einer Folge von mindestens zwei magnetokalorischen Materialien (2) mit verschiedenen Curie-Temperaturen, die nach ihrer steigenden Curie-Temperatur angeordnet sind, wobei das warme Ende (3) des besagten magnetokalorischen Elements (1) aus dem magnetokalorischen Material (2) mit der höchsten Curie-Temperatur besteht und das kalte Ende (4) des besagten magnetokalorischen Elements (1) aus dem magnetokalorischen Material (2) mit der niedrigsten Curie-Temperatur besteht, und aus mindestens einer magnetischen Anordnung und mindesteins ein Mittel zum Antreiben eines Wärmeübertragungsfluids, wobei die besagte magnetische Anordnung ausgelegt ist, um die besagten magnetokalorischen Materialien (2) einem variablen Magnetfeld auszusetzen und abwechselnd in letzteren einen Heiz-Zyklus und einen Kühl-Zyklus zu erzeugen, **dadurch gekennzeichnete**r Generator, dass er das Verfahren nach einem beliebigen der Ansprüche 1 bis 7 anwendet und dadurch, dass das besagte Mittel zum Antreiben eines Wärmeübertragungsfluids ausgelegt ist, um das besagte Wärmeübertragungsfluid in einer Wechselfolge von Hüben mit variablen Längen nacheinander in Richtung des warmen Endes (3) und des kalten Endes (4) zu bewegen, bis zwischen dem besagten warmen (3) und kalten (4) Ende ein vorbestimmter Temperaturgradient erreicht wird

9. Generator nach Anspruch 8, **dadurch gekennzeichnet, dass** er zumindest ein magnetokalorisches Element (1) beträgt, das aus magnetokalorischen Materialien (2) besteht, deren maximale magnetokalorische Wirkung in dem thermischen Betriebsbereich des besagten Generators liegt.
